Europäisches Patentamt

European Patent Office

Office européen des brevets

(11) Veröffentlichungsnummer: **0 125 476**
**A2**

(12) # EUROPÄISCHE PATENTANMELDUNG

(21) Anmeldenummer: 84103857.3

(22) Anmeldetag: 06.04.84

(51) Int. Cl.³: **G 01 D 13/20**
G 01 D 11/28, G 12 B 11/00

(30) Priorität: 14.04.83 DE 3313463

(43) Veröffentlichungstag der Anmeldung:
21.11.84 Patentblatt 84/47

(84) Benannte Vertragsstaaten:
AT BE CH DE FR GB IT LI NL SE

(71) Anmelder: Pforzheimer Uhren-Rohwerke PORTA GmbH
& Co.
Maximilianstrasse 46
D-7530 Pforzheim(DE)

(72) Erfinder: Wehner, Hans J.
Waldpark 1
D-7531 Eisingen(DE)

(72) Erfinder: Burkhardt, Wolfgang
Landhausstrasse 10
D-7536 Ispringen(DE)

(74) Vertreter: Trappenberg, Hans
Wendtstrasse 1
D-7500 Karlsruhe 21(DE)

(54) Instrumentenbeleuchtung.

(57) Instrumentenbeleuchtungen sollen die Anzeige-Markierungen blendfrei und ohne die Adaption des Auges an die Umgebungshelligkeit zu stören, abzulesen sein. Durch die üblichen externen im Bereich des sichtbaren Lichtes arbeitenden Beleuchtungseinrichtungen ist dies nicht möglich.

Die Erfindung gibt eine Beleuchtungseinrichtung an, die die auf der Anzeigefläche der Instrumente angebrachten Markierungen die auch auf beweglichen Anzeigeteilen angebracht sein können, dadurch erkennbar macht, daß die Markierungen mit einem Luminophor belegt sein können, durch eine vorzugsweise außerhalb des sichtbaren Bereiches liegende Strahlung beleuchtet beziehungsweise zum Leuchten angeregt werden.

Fig 1

Fig 2

EP 0 125 476 A2

04.04.1984 n21


Pforzheimer Uhren-Rohwerke PORTA GmbH & Co.
Maximilianstr. 46, 7530 Pforzheim


Instrumentenbeleuchtung

Die Erfindung betrifft eine von einer externen Lichtquelle
unabhängige, blendfreie Instrumentenbeleuchtung zur Beleuchtung von Markierungen auf der Anzeigefläche eines Instrumentes, insbesondere für Instrumente mit beweglichen Anzeigeteilen, wie Zeigern oder beweglichen Skalen, wobei die Markierungen mit Leuchtstoff versehen sein können.

Des öfteren besteht der Zwang, Instrumente auch ohne externe Beleuchtung exakt ablesen zu können. Dies ist beispielsweise der Fall beim Führen von Fahrzeugen, also in den Führerräumen von Land-, Wasser- und Luftfahrzeugen, wo eine externe Beleuchtung stören würde, da sie die Adaption des Auges auf die Umgebungshelligkeit stören würde. Bisher behilft man sich in diesen Fällen so, daß die Instrumente einzeln durch eine oder mehrere kleine Lichtquellen ausgeleuchtet werden, die zudem noch subjektiv nach dem Adaptionsvermögen der Augen des Führers dieser Fahrzeuge hinsichtlich
ihrer Lichtstärke einstellbar sind. Bei diesen Beleuchtungsquellen handelt es sich durchweg um sichtbares Licht. Als
nachteilig wird bei dieser Art Instrumentenbeleuchtung, die
ja auch eine externe Beleuchtung darstellt, empfunden, daß
das Adaptionsvermögen des Auges an die Umgebungshelligkeit
deutlich herabgesetzt wird, da sich das Auge bekanntlich
auf die hellste Stelle im Blickbereich einstellt, diese
hellste Stelle aber bei dieser Art Instrumentenbeleuchtung
eben diese beleuchteten Anzeigefelder sind. Hinzu kommen
noch die Möglichkeiten von Blenderscheinungen, durch spiegelnde Anzeigeflächen oder Gläser. Da diese Art Beleuchtung
im allgemeinen durch Glühlampen erzeugt wird, ist auch der
Stromverbrauch hierfür recht beachtlich, insbesondere unter
Berücksichtigung, daß diese Beleuchtung auch dann noch funktionieren muß, wenn die normale Stromversorgung ausgefallen
und durch eine Notstromversorgung ersetzt ist. Gerade unter
Beachtung dieses Punktes ist es beispielsweise bei Wasser-
und Luft-Passagierfahrzeugen vorgeschrieben, daß die Führer
dieser Fahrzeuge eine externe bewegliche Lichtquelle (Taschenlampe etc.) mitführen müssen. Die hohen Ströme der Beleuchtung bedingen jedoch nicht nur eine entsprechende Kapazität der Notstromanlagen, sondern können auch zu Störungen
der manchmal gegen elektrische beziehungsweise elektromagnetische Felder sehr empfindlichen Instrumente führen.

Um zumindest die Dämmerungszeit vor Einbruch der Nacht und
auch eine gewisse Zeit nach Einbruch der Dunkelheit ohne
diese als nachteilig empfundene Beleuchtung überbrücken zu
können, ist es seit längerer Zeit bekannt, die Markierungen
mit nachleuchtendem Leuchtstoff (phosphoreszierendem Leuchtstoff) zu belegen. Diese phosphoreszierenden Leuchtstoffe
speichern Anteile der angeregten Lichtemission und geben
sie erst nach und nach, je nach dem phosphoreszierenden Material, innerhalb von Minuten oder Stunden wieder ab. Die
Zeitdauer der Lichtemission bei diesen phosphoreszierenden
Leuchtstoffen hängt allerdings auch von der vorherigen Anregungszeit beziehungsweise Anregungsenergie, wie auch von

der Temperatur zum Zeitpunkt der Lichtemission ab. Sie ist daher recht unterschiedlich und kann aus Sicherheitsgründen zum Erkennen der Markierungen von lebenswichtigen Instrumenten nicht allein zugelassen werden.

Aufgabe der Erfindung ist es, eine Instrumentenbeleuchtung mit niedrigem Strombedarf anzugeben, die auch bei sehr geringer Umgebungshelligkeit die Adaption des Auges an diese geringe Helligkeit nicht behindert, die aber trotzdem deutlich die Anzeigemarkierunen auf den Instrumenten erkennen läßt.

Erreicht wird dies nach der Erfindung durch eine, vorzugsweise oberhalb der Anzeigefläche angeordnete, insbesondere außerhalb des sichtbaren Wellenbereiches strahlende Licht- beziehungsweise Anregungsquelle für die gegebenenfalls mit Luminophoren belegten Markierungen.

Nicht mehr also wie bei den bekannten Instrumentenbeleuchtungen werden die Anzeigeflächen durch extern angeordnete Beleuchtungskörper, die im Bereich des sichtbaren Lichtes strahlen, ausgeleuchtet, sondern durch Licht- beziehungsweise Anregungsquellen, die insbesondere außerhalb des sichtbaren Lichtes strahlen und die Markierungen intern beleuchten beziehungsweise die Luminophore auf den Markierungen zum Leuchten im sichtbaren Bereich anregen. Der Wellenbereich der Licht- beziehungsweise Anregungsquelle ist hierbei nahezu beliebig, jedoch müssen die niederwelligen Bereiche ab den Röntgenstrahlen aus gesundheitlichen Gründen ausgespart bleiben. Da die Lichtemission stets langwelliger erfolgt als die Anregung, empfiehlt sich daher als Anregungsquelle für die Luminophore eine Strahlung zwischen dem Wellenbereich der Röntgenstrahlung und dem sichtbaren Licht, also eine Strahlung zwischen 100 nm und 550 nm, insbesondere jedoch um die harte UV-Strahlung, wie auch den sichtbaren Bereich der Strahlung weitgehend auszuschalten, zwischen 320 nm und 450 nm. Die Luminophore können durch
diese Anregungsquelle zum Fluoreszieren oder Phosphoreszieren angeregt werden. Zweckmäßigerweise wird durch die Wahl
des Luminophors eine grün leuchtende Farbe festgelegt, die
der Farbe des bisher verwendeten Leuchtstoffs, vorzugsweise
aus Zinksulfid, entspricht.

Selbstverständlich kann die Erfindung auch durch eine
Licht- beziehungsweise Anregungsquelle verwirklicht werden,
die innerhalb des Bereichs des sichtbaren Lichtes liegt.
Auch dann kann immer noch eine Umsetzung des niederwelligen
Anteiles des Lichtes in entsprechend höherwelliges Licht
durch geeignete Luminophore erfolgen. Selbstverständlich
kann das sichbare Licht auch einen gewissen UV-Anteil enthalten, der die Intensität der ausgehenden Strahlung verstärkt. Auch bei höherwelligem Licht, beispielsweise bei
rot bis dunkelrot strahlendem Licht, ist noch eine gute Erkennbarkeit der Markierungen möglich, insbesondere dann,
wenn die Farbe der Markierungen dem Lichtbereich angepaßt
wird. Dies ist insbesondere dann zweckmäßig, wenn monochromatisches Licht oder Licht mit einer großen Amplitude, die
in einem eng begrenzten Wellenberech liegt, eingeleitet
wird. Interessant ist im letzten Falle, daß die Adaption
des Auges für die Umgebungshelligkeit kaum beeinträchtigt
wird, wenn monochromatisches Licht oder nahezu monokchromatisches Licht zur Beleuchtung der Instrumenten-Markierungen
verwendet wird.

Eine spezielle Anwendungsmöglichkeit, die gerade für Licht
im sichtbaren Bereich, insbesondere im kurzwelligen sichtbaren Bereich, jedoch auch im UV-Bereich interessant ist,
ist die Verwendung von "lichtsammelndem Kunststoff". Das in
derartige Kunststoffplättchen eintretende Licht wird durch
eingebettete Fluoreszenz-Farbstoffe in längerwelliges Licht
umgewandelt, das innerhalb der Breitseiten des Kunststoffplättchens stetig reflektiert und nur an dessen Kanten austreten kann. Wird lediglich eine zur Schauseite weisende
Kante freigelassen und die restlichen Kanter verspiegelt,
so ist eine deutliche Bündelung der eintretenden Lichtstrahlen festzustellen, was sich dahingehend auswirkt, daß eine
sehr geringe Einstrahlung bereits eine deutliche Markierung
an der Kante dieses Plättchens bewirkt.

Denkbar ist bei der Darstellung der Erfindung auch eine
Anregung durch Ultraschall (Hyperschall), also eine Sono-
Luminiszenz. Der Rahmen der Erfindung wird auch dann nicht
verlassen, wenn die gesamte Anzeigefläche durch eine Elektroluminiszenzplatte (EL-Display) gebildet wird, die bis
auf die Anzeigemarkierungen abgedeckt wird, da auch hier
eine Elektroluminiszenz stattfindet, also auch eine Anregungsquelle und Luminophore vorhanden sein müssen.

Mit der heute bekannten Technik dürfte die Anwendung von
Foto-Luminiszenz am wirtschaftlichsten und einfachsten
sein. Die Licht- beziehungsweise Anregungsquelle wird also
zur Anregung der Luminophore in dem oben angegebenen Wellenbereich, also im UV-Wellenbereich strahlen oder aber im
sichtbaren, vorzugsweise im grünen Bereich. Als Anregungsquellen kommen hier in Frage Luminiszenzdioden, Elektroluminiszenzplatten (EL-Displays), vorzugsweise ringförmig gebogene Niederdruck-Gasentladungslampen, insbesondere mit
"Schwarzglas"-Kolben, wie auch wiederum vorzugsweise ringförmig gebogenen Mini-Leuchtstofflampen. Diese Anregungsquellen können auch mit den beweglichen mechanischen Anzeigeteilen verbunden sein und beispielsweise induktiv mit
Strom versorgt werden. Die Strahlung der Licht beziehungsweise Anregungsquelle kann sich über den gesamten Bereich
der Anzeigefläche erstrecken, beispielsweise durch Einstrahlung von oben/seitwärts; die Licht- beziehungsweise Anregungsquellen können jedoch auch punktförmig jeweils eine
Markierung bestrahlen. Eine großflächige Bestrahlung kann
auch dadurch erreicht werden, daß oberhalb der Markierungen die anregende Strahlung reflektierende Flächen (Spiegel) angebracht sind. Derartige Flächen können auch beispielsweise durch eine Beschichtung des abdeckenden Instrumentenglases erzeugt werden. Es besteht auch die Möglichkeit, daß das Instrumenten-Abdeckglas als flächiger Lichtleiter ausgebildet wird, der wiederum den gesamten Raum über der Anzeigefläche bestrahlt. Eine punktförmige Anstrahlung der Markierung kann erreicht werden durch im entsprechenden Wellenbereich strahlende Luminiszenzdioden, die oberhalb der Markierungen anzubringen sind oder durch Lichtleiter, die das Licht einer oder mehrerer Licht- beziehungsweise Anregungsquellen zu den entsprechenden Markierungen führen.

Zusätzlich kann auch noch die Anzeigefläche, um den Kontrast zu verstärken und störendes Fremdlicht auszuschalten, mit einem weitgehend die sichtbare Strahlung absorbierenden Belag versehen sein.

Insgesamt ergibt sich damit eine Instrumentenbeleuchtung, die lediglich die Markierungen im sichtbaren Licht strahlen läßt, während die Energiezufuhr für diese Strahlung insbesondere im unsichtbaren Wellenbereich liegt. Damit erfolgt eine Adaption des Auges lediglich auf diese geringfügigen Lichtquellen, deren Strahlungsintensität zudem noch einstellbar ausgeführt werden kann; die Adaption des Auges auf die geringe Umgebungshelligkeit wird also nicht gestört.

Außerdem ist festzustellen, daß alle die beschriebenen Anregungsquellen nur eine sehr geringe Stromaufnahme aufweisen, der Stromverbrauch also äußerst gering ist.

Denkbar ist schließlich auch, daß die Luminophore den Flüssigkristallen von Anzeige-Displays beigemengt werden, oder daß diese Flüssigkristalle selbst floureszieren beziehungsweise phosphoreszieren, so daß auch elektronische Anzeigen auf die erfindungegemäße Art sichtbar gemacht werden können.

Auf der Zeichnung ist schematisch ein Ausführungsbeispiel
dargestellt, und zwar zeigen:

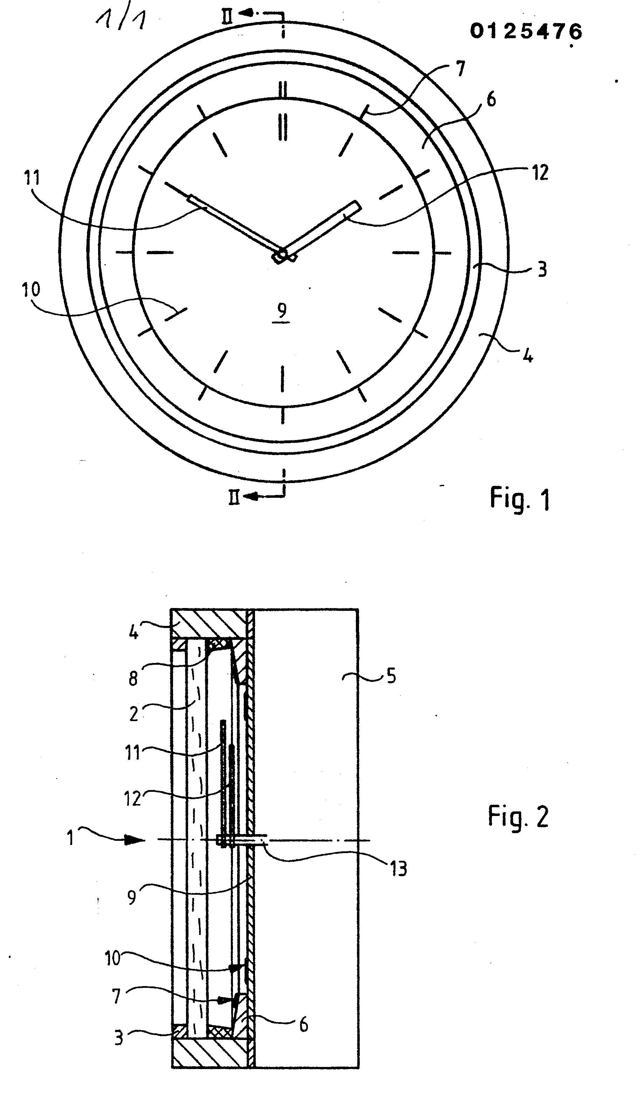

Fig. 1  die Ansicht der Anzeigefläche einer Uhr und

Fig. 2  einen Querschnitt nach Schnittlinie II/II.

Die Anzeigefläche 1 einer Uhr ist durch ein Abdeckglas 2
abgedeckt. Das Abdeckglas 2 ist durch einen Schraubring 3
in einem Stellring 4 gehalten, der seinerseits auf einem
Uhrwerkskörper 5 drehbar gelagert ist. Im Stellring 4, mit
ihm verbunden, befindet sich eine drehbare Skala 6, die mit
Markierungen 7 versehen ist. Zwischen dieser Skala 6 und
dem Abdeckglas 2 eingefügt ist ein ringförmiges Elektroluminiszenzdisplay (EL-Display 8), das bei Anregung im Bereich um etwa 400 nm strahlt. Unter diesem drehbaren System
befindet sich als Anzeigefläche ein Zifferblatt 9, auf dem
wiederum Markierungen 10 angebracht sind. In üblicher Weise
sind dann auch noch Zeiger 11, 12 an einer Achse 13 vorgesehen. Die Markierungen 7, 10 sind ebenso wie die Zeiger
11, 12 mit Luminiphor versehen.

Wird die Anregungsquelle, also das EL-Display 8, mit Strom
versorgt, so strahlt es im ultravioletten Bereich um etwa
400 nm und wird daher das auf den Markierungen 7, 10 und
den Zeigern 11, 12 angebrachte Luminophor zum Leuchten im
sichtbaren Bereich anregen. Da die Strahlungsintensität des
EL-Displays 8 gesteuert beziehungsweise geregelt werden
kann, läßt sich hiermit auch die Intensität der Lichtemission der Luminophore steuern beziehungsweise in Abhängigkeit von der Umgebungshelligkeit regeln. Es kann davon ausgegangen werden, daß der gesamte Raum zwischen dem Abdeckglas 2 und dem Zifferblatt 9 von dieser UV-Strahlung erfüllt ist, so daß sämtliche mit Luminophor belegten Stellen
aufleuchten werden. Dies betrifft selbstverständlich auch
die beweglichen Anzeigeteile, in diesem Falle also die Zeiger 11, 12, wie auch die verdrehbare Skala 6. Für den Betrachter des Instrumentes ergeben sich dadurch weder Schwierigkeiten beim Erkennen der Markierungen, noch Schwierigkeiten bei der Adaption des Auges an die Umgebungshelligkeit.

Strahlt das EL-Display 8 im sichtbaren Bereich des Lichtes,
so ist es sowohl möglich, die Markierungen direkt in diesem
Licht zu erkennen, oder auch wiederum Luminophore vorzusehen, die durch die möglicherweise kurzwellige Lichtstrahlung in längerwelligem Licht aufleuchten. Selbstverständlich ist auch eine Mischung beider Lichtarten, also die
Einstrahlung von sichtbarem Licht mit einem kurzwelligen
Anteil, so daß die Markierungen sowohl im Licht erkennbar
sind, wie auch durch die Umwandlung des kurzwelligen Lichtes in längerwelliges Licht aufleuchten, möglich. Die Erkennbarkeit der Markierungen wird hierbei, insbesondere bei
monochromatischem oder nahezu monochromatischem Licht
dadurch gefördert, daß die Markierungen in dieser
Lichtfarbe ausgeführt sind.

04.04.1984 n21


Pforzheimer Uhren-Rohwerke PORTA GmbH & Co.
Maximilianstr. 46, 7530 Pforzheim


P A T E N T A N S P R Ü C H E

1.  Von einer externen Lichtquelle unabhängige, blendfreie
Instrumentenbeleuchtung zur Beleuchtung von Markierungen
auf der Anzeigefläche eines Instrumentes, insbesondere für
Instrumente mit beweglichen Anzeigeteilen, wie Zeigern,
beweglichen Skalen, oder elektronisch veränderbaren Anzeigen, wobei die Markierungen mit Leuchtstoff versehen sein
können,
gekennzeichnet
durch eine vorzugsweise oberhalb der Anzeigefläche (Zifferblatt 9) angeordnete, insbesondere außerhalb des sichtbaren
Wellenbereiches strahlende Licht- beziehungs Anregungsquelle (EL-Display 8) für die gegebenenfalls mit Luminophoren belegte Markierungen (7, 10) (Zeiger 11, 12).

0125476

2. Instrumentenbeleuchtung nach Anspruch 1,

dadurch gekennzeichnet,

daß für jede Markierung (7, 9, 11, 12) jeweils eine (Teil-)
Licht- beziehungs Anregungsquelle vorgesehen ist.

3. Instrumentenbeleuchtung nach einem oder mehreren
der vorhergehenden Ansprüche,

dadurch gekennzeichet,

daß von der Licht- beziehungs Anregungsouelle zu den Markierungen (7, 10, 11, 12) führende Lichtleiter vorgesehen
sind.

4. Instrumentenbeleuchtung nach Anspruch 3,

dadurch gekennzeichnet,

daß das Instrumenten-Abdeckglas (2) als flächiger Lichtleiter ausgebildet ist.

5. Instrumentenbeleuchtung nach Anspruch 3,

dadurch gekennzeichnet,

daß die Lichtleiter in das Instrumenten-Abdeckglas (2) eingefügt sind.

6. Instrumentenbeleuchtung nach einem oder mehreren
der vorhergehenden Ansprüche,

dadurch gekennzeichnet,

daß die Markierungen (7, 10) (Zeiger 11, 12) durch die
Kante eines Kunststoffplättchens, das mit Flureszenz-Farbstoffen gefüllt ist und dessen Breitseite(n) durch die
Licht- beziehungsweise Anregungsquelle angestrahlt wird,
gebildet sind.

7. Instrumentenbeleuchtung nach einem oder mehreren
der vorhergehenden Ansprüche,

dadurch gekennzeichnet,

daß oberhalb der Markierungen die eingebrachte Strahlung
(Licht- beziehungsweise Anregungsenergie) reflektierende

Flächen (Spiegel) angebracht sind.

8.   Instrumentenbeleuchtung nach Anspruch 1,
dadurch gekennzeichnet,
daß der Wellenbereich der die Luminophore anregenden
Strahlung zwischen 100 nm und 600 nm, insbesondere zwischen
320 nm und 450 nm liegt.

9.   Instrumentenbeleuchtung nach Anspruch 1,
dadurch gekennzeichnet,
daß die Licht- beziehungsweise Anregungsquelle monochromatisches Licht oder Licht großer Intensität in einem kleinen
Wellenbereich abgibt und daß die Markierungen (7, 10)
(Zeiger 11, 12) die diesem Wellbereich entsprechende Farbe
aufweisen.

10.   Instrumentenbeleuchtung nach Anspruch 1,
dadurch gekennzeichnet,
daß die Licht- beziehungweise Anregungsquelle eine oder
mehrere Luminiszenzdioden sind.

11.   Instrumentenbeleuchtung nach Anspruch 1,
dadurch gekennzeichnet,
daß die Licht- beziehungs Anregungsquelle eine oder mehrere
Elektroluminiszenzplatten (EL-Display 8) sind.

12.   Instrumentenbeleuchtung nach Anspruch 1,
dadurch gekennzeichnet,
daß die Licht- beziehungs Anregungsquelle eine vorzugsweise
ringförmig gebogene Niederdruck-Gasentladunslampe ist, die
vorzugsweise mit einem "Schwarzglas"-Kolben für eine
Strahlung zwischen 300 nm und 450 nm versehen ist.

13. Instrumentenbeleuchtung nach Anspruch 1,
dadurch gekennzeichnet,
daß die Licht- beziehungs Anregungsquelle eine vorzugsweise
ringförmig gebogene Mini-Leuchtstofflampe ist.

14. Instrumentenbeleuchtung nach Anspruch 1,
dadurch gekennzeichnet,
daß die Licht- beziehungsweise Anregungsquelle ein
Ultraschallsender (Hyperschallsender) ist.

15. Instrumentenbeleuchtung nach Anspruch 1,
dadurch gekennzeichnet,
daß die Luminophore fluoreszierend oder phosphoreszierend
sind.

16. Instrumentenbeleuchtung nach Anspruch 1,
dadurch gekennzeichnet,
daß die Anzeigefläche (Zifferblatt 9) mit Ausnahme der
Markierungen (7, 10) mit einem weitgehend die sichtbare
Strahlung absorbierenden Belag versehen ist.

1/1                    0125476

Fig. 1

Fig. 2